## Europäisches Patentamt
## European Patent Office
## Office européen des brevets

(19)

(11) Veröffentlichungsnummer: **0 106 798**
**B1**

(12) **EUROPÄISCHE PATENTSCHRIFT**

(45) Veröffentlichungstag der Patentschrift:
**03.09.86**

(21) Anmeldenummer: **83810417.2**

(22) Anmeldetag: **21.09.83**

(51) Int. Cl.⁴: **A 47 L 7/00,** A 47 L 9/18,
B 01 D 23/04, B 01 D 23/26

(54) Flüssigkeitssauger.

(30) Priorität: **23.09.82 CH 5635/82**

(43) Veröffentlichungstag der Anmeldung:
**25.04.84 Patentblatt 84/17**

(45) Bekanntmachung des Hinweises auf die Patenterteilung:
**03.09.86 Patentblatt 86/36**

(84) Benannte Vertragsstaaten:
**AT DE FR NL SE**

(56) Entgegenhaltungen:
**DE-A-2 317 309**
**DE-A-2 627 725**
**FR-A-351 972**
**GB-A-2 005 357**

(73) Patentinhaber: **von Rohr, Martin, Waldweg 8, CH-4153 Reinach (CH)**

(72) Erfinder: **von Rohr, Martin, Waldweg 8, CH- 4153 Reinach (CH)**

(74) Vertreter: **Eschmann, Heinz, A. Braun, Braun, Héritier, Eschmann AG Patentanwälte Holbeinstrasse 36- 38, CH- 4051 Basel (CH)**

LIBER, STOCKHOLM 1986

## Beschreibung

Die vorliegende Erfindung betrifft einen Flüssigkeitssauger zum Absaugen einer mit Feststoffen verunreinigten Flüssigkeit, wie sie insbesondere bei Waschvorgängen anfällt, mit einem Gehäuse, das durch eine Filteranordnung in eine obere, mit einem Zulauf versehene Kammer für verunreinigte Flüssigkeit und eine darunterliegende mit einem Ablaufversehene Kammer für gefilterte Flüssigkeit unterteilt und mit einer Ansaugvorrichtung versehen ist.

Es ist bekannt, dass von Kaminfegern, Malern und anderen Handwerkern in steigendem Ausmasse Flüssigkeitssauger eingesetzt werden, welche zum Absaugen von mit Feststoffen verunreinigten Flüssigkeiten dienen. Ein Anwendungsbeispiel ist das Abspritzen von Hausfassaden oder Kellerwänden durch den Maler, ein anderes das Waschen von Heizkesseln mittels Druckwasser durch den Kaminfeger. In allen diesen Fällen, die selbstverständlich auch in Privathaushalten auftreten können, liegt nach Beendigung des Waschprozesses eine meist stark verunreinigte Flüssigkeit vor, welche keineswegs der öffentlichen Abwasseranlage zugeführt werden darf. Letzteres scheint aber zur Zeit mangels geeigneter Filtereinrichtungen immer noch teilweise der Fall zu sein.

Es ist daher schon versucht worden, die verunreinigte Flüssigkeit zu filtrieren, bevor diese der öffentlichen Kanalisation zugeleitet wird. Dies bedingt aber das Mitführen bzw. Aufstellen einer Filteranlage und bringt bei Verwendung der bekannten Filter insbesondere grosse Wartezeiten mit sich, die umso länger sind, als die Filter inanbetracht der starken Verschmutzung extrem häufig regeneriert werden müssen.

In der GB-A-2 005 357 ist eine fahrbare Flüssigkeits-Pumpvorrichtung beschrieben, welche einen abnehmbaren Behälter und eine ausserhalb desselben, im unteren Abschnitt eines Gestells angeordnete Förderpumpe aufweist. Mit dieser Vorrichtung kann eine Flüssigkeit, beispielsweise die Schmierölemulsion einer Werkzeugmaschine, angesaugt werden, wobei sie einen innerhalb des Behälters angeordneten Filtereinsatz passiert und anschliessend in gereinigter Form wieder abgegeben wird. Da die Förderpumpe sehr tief am Gestell angebracht ist, kann der Ansaugevorgang durch eine Verschlechterung der Filterdurchlässigkeit, beispielsweise infolge Verunreinigung beeinträchtigt werden.

Es ist daher die Aufgabe der vorliegenden Erfindung, einen solchen Flüssigkeitssauger vorzuschlagen, welcher eine rasche und einfache Filterung, insbesondere ein problemloses Ansaugen, der Flüssigkeit gestattet. Dieser Flüssigkeitssauger ist im unabhängigen Patentanspruch definiert. Bevorzugte Ausführungsformen ergeben sich aus den abhängigen Patentansprüchen.

Nachstehend wird anhand der beiliegenden Zeichnung ein Ausführungsbeispiel des Erfindungsgegenstandes mit einer Konstruktionsvariante beschrieben.

Fig. 1 ist eine teilweise im Schnitt dargestellte Perspektivansicht einer Ausführungsform des erfindungsgemässen Flüssigkeitssaugers,

Fig. 2 veranschaulicht schematisch das Funktionsprinzip des Flüssigkeitssaugers,

Fig. 3 ist eine perspektivische Schnittdarstellung eines Filtereinsatzes und

Fig. 4 zeigt eine Ausführungsvariante anhand einer perspektivischen Schnittdarstellung eines Filtersatzes.

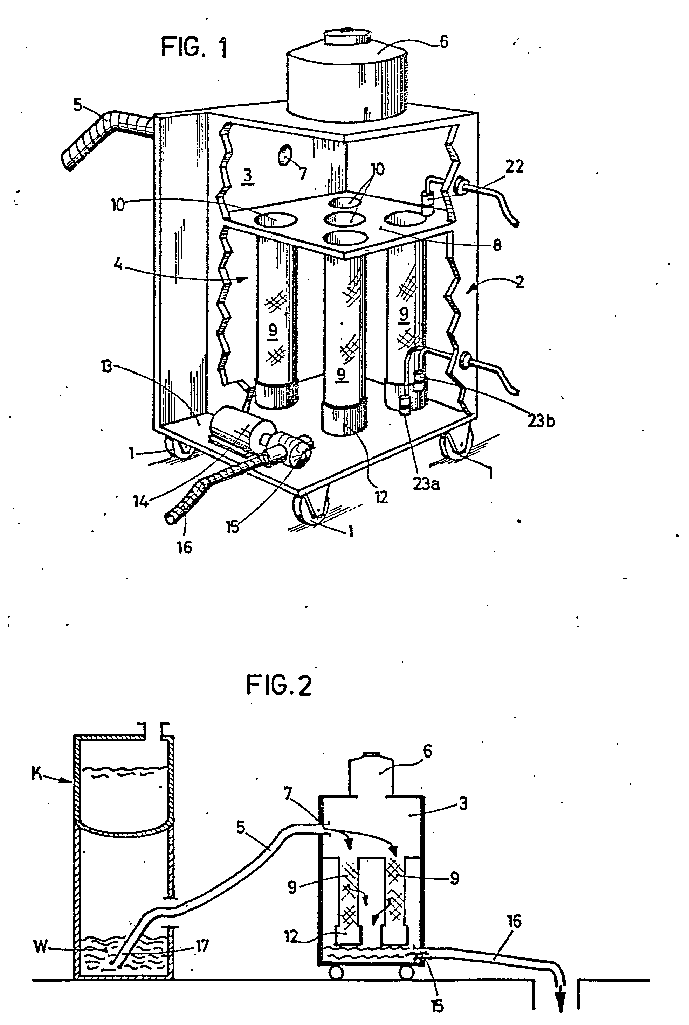

Gemäss Fig. 1 ist auf Rollen 1 ein Gehäuse 2 gelagert, das eine Kammer 3 zur Aufnahme eines Filters 4 umschliesst. Die Kammer 3 ist mit einem flexiblen Schlauch 5 an einen bekannten Saugkopf angeschlossen und steht ferner mit einem auf dem Gehäuse 1 befestigten Sauggebläse 6 in Verbindung, das ein motorisch angetriebenes Gebläse aufweist und in der Kammer 2 einen Unterdruck erzeugt. Durch die Oeffnung 7 wird dadurch Schmutzwasser über den Schlauch 5 in die Kammer 3 gesaugt.

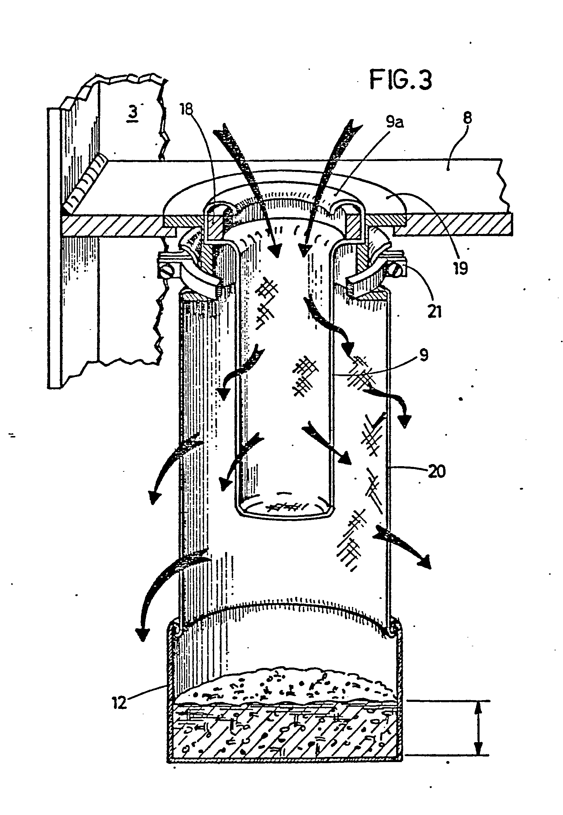

An einer in der Kammer 3 befestigten Platte 8 sind fünf Filtereinsätze 9 aufgehängt, welche bei der vorliegenden Ausführungsform aus Polypropylen mit einer Maschenbreite zwischen 0,08 und 0,20 mm bestehen. Die sackartigen Filtereinsätze 9 sind - wie nachstehend anhand der Fig. 3 noch beschrieben wird - mit ihren oberen Abschnitten an entsprechenden Oeffnungen 10 der Platte 8 befestigt und hängen nach unten. Die Einsätze sind somit nur im oberen Einströmbereich der Oeffnungen 10 offen, wogegen der untere Abschnitt jedes Filtereinsatzes entweder strumpfartig verschlossen sein oder in einen Napf 12 ragen kann.

Auf dem Boden 13 des Gehäuses 2 ist ein Motor 14 angeordnet, welcher eine Absaugepumpe 15 antreibt. Die Pumpe 15 ist dazu bestimmt, die im Unterteil der Kammer 3 anfallende filtrierte Flüssigkeit aus der Kammer über einen Schlauch 16 abzusaugen.

In Fig. 2 ist schematisch veranschaulicht, wie die in Fig. 1 dargestellte Vorrichtung zum Absaugen von Schmutzwasser aus einem mittels Druckwassers gereinigten Heizkessel eingesetzt werden kann. Im unteren Abschnitt des mit K bezeichneten Heizkessels hat sich, wie Fig. 2 zeigt, das mit W bezeichnete Schmutzwasser gesammelt, nachdem die Heizfläche des Heizkessels mittels Druckwassers gereinigt wurde. In dieses Schmutzwasser ragt der Saugkopf 17 des Ansaugeschlauches 5, dessen anderes Ende, wie auch Fig. 1 zeigt, über die Oeffnung 7 in die Kammer 3 mündet. Von hier gelangt das Schmutzwasser in Pfeilrichtung in die von den sackförmigen Filtereinsätzen 9 umschlossenen Räume, durchdringt die Filtereinsätze von innen nach aussen und sammelt sich dann im unteren Teil der Kammer 3, wo es durch 1 die Pumpe 15 über den Schlauch 16 in die Kanalisation befördert wird. Sowohl der konstruktive Aufbau als auch die Bedienung des Gerätes sind äusserst einfach, so dass das Schmutzwasser aus dem Heizkessel innerhalb weniger Minuten abgesaugt werden kann. Die Reinigungswirkung der verwendeten Filtereinsätze ist, wie Versuche gezeigt haben, so gut, dass das filtrierte Wasser ohne weiteres der öffentlichen Kanalisation zugeleitet werden kann.

Um das beschriebene Gerät voll einsatzfähig zu machen, sind jedoch noch einige zusätzliche Merkmale bzw. Apparaturen zweckmässig, welche nachstehend anhand der Zeichnung beschrieben werden.

So ist es u.a. von Bedeutung, dass die Filtereinsätze 9 aus einem Kunststoffmaterial bestehen, an welchem die Schmutzteilchen nicht stark haften, so dass dieselben leicht nach unten rutschen können. Ein Polypropylengewebe mit einer Maschenweite zwischen 0,08 und 0,20 mm hat sich beispielsweise hierfür bewährt. Bei dieser Wahl des Filtereinsatzmateriales ergibt sich nämlich der weitere Vorteil, dass der an der Innenseite des Filtereinsatzes 9 zurückgehaltene Schmutz auf der glatten Oberfläche des Filtereinsatzes nach unten rutscht und schliesslich in den unterhalb des Filtereinsatzes angeordneten Napf 12 (vergleiche auch Fig. 3) fällt. Dadurch wird der raschen Verschmutzung des Filtereinsatzes 9 vorgebeugt, wobei der Napf 12 vorzugsweise so aufgehängt ist, dass er sich durch leicht lösbare Mittel von Zeit zu Zeit abnehmen und entleeren lässt.

Wie Fig. 3 ferner zeigt, ist der Filtereinsatz 9 so ausgebildet, dass dessen oberer Abschnitt 9a einen Ring 18 übergreift und mittels dem letzteren in der Ringschulter eines Einsatzflansches 19 verklemmt ist. Es ist ferner der Fig. 3 zu entnehmen, dass bei der hier dargestellten Ausführungsform konzentrisch zum Filtereinsatz 9 ein zweiter Filtereinsatz 20 angeordnet ist, dessen Oberteil über eine Klemmbride 21 am unteren Abschnitt des Einsatzflansches 19 befestigt ist. Im Gegensatz zum inneren Filtereinsatz 9 ist der äussere Filtereinsatz 20 bei dieser Variante unten offen, so dass von der Innenseite des Filtereinsatzes 9 die gröberen und schwereren Schmutzteilchen ungehindert in den Napf 12 fallen können.

Die Verklemmung der Filtereinsätze mittels des Ringes 18 bzw. der Klemmbride 21 stellt nur ein Ausführungsbeispiel dar und kann vom Fachmann im Rahmen des Erfindungsgedankens auch mit anderen, bekannten Mitteln gelöst werden.

Beim Ansaugen des Schmutzwassers über den Schlauch 5 steigt der Schmutzwasserspiegel oberhalb der Filtereinsätze 9 selbstverständlich an. Um ein Ueberfüllen zu verhindern, ist in der Kammer 3 oberhalb der Platte 8 ein Schwimmerschalter 22 angeordnet, der als Ueberfüllsicherung arbeitet und den Motor des Sauggebläses 6 abstellt, sobald ein bestimmtes Maximalniveau erreicht ist.

Im unteren Teil der Kammer 3 sind oberhalb des Bodens 13 zwei Schwimmer 23a und 23b in vertikalem Abstand, d.h. auf verschiedenen Höhen, angeordnet. Diese beiden Schwimmer dienen zur Regulierung des Niveaus im unteren Kammerteil. Beim Ansteigen des Wasserspiegels auf ein bestimmtes Niveau spricht der obere Schwimmer 23b an und schaltet die Absaugepumpe 15 ein, während der untere Schwimmer die Pumpe 15 ausschaltet, sobald der Wasserspiegel unter ein bestimmtes Minimalniveau absinkt. Dank der Anordnung der drei oben erwähnten Schwimmer arbeitet die Anlage praktisch selbsttätig.

Die Filtereinsätze 9 bzw. 20 werden vorzugsweise innerhalb des Gehäuses 2 angeordnet, doch wäre deren Anordnung vor bzw. nach diesem Gehäuse grundsätzlich ebenfalls möglich. Man könnte das Schmutzwasser beispielsweise in einen getrennten Behälter absaugen und von diesem in einen mit Filtereinsätzen versehenen Behälter umgiessen.

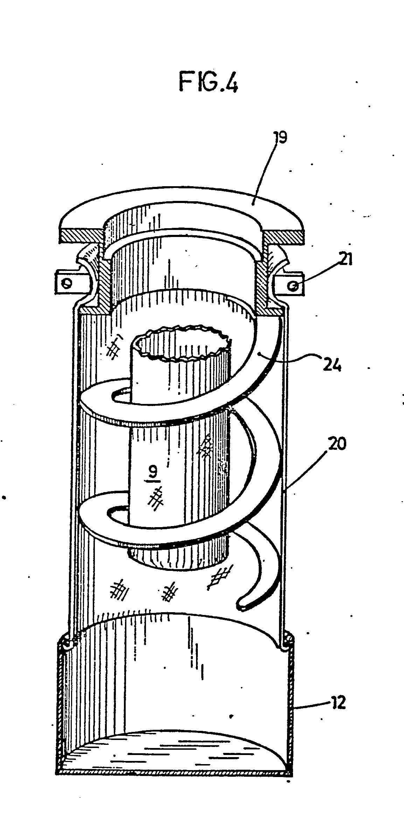

Das beschriebene Ausführungsbeispiel kann vom Fachmann in mannigfaltiger Weise im Rahmen des Erfindungsgedankens abgewandelt werden. So wäre es beispielsweise gemäss Fig. 4 möglich, zwischen den beiden in Fig. 3 dargestellten Filtereinsätzen 9 und 20 einen schraubenlinienförmigen Steg 24 anzuordnen. Dadurch würde das aus dem inneren Filtereinsatz 9 austretende, vorfiltrierte Wasser gezwungen, auf einem relativ grossen Weg nach unten zu strömen, so dass sich eine grosse Berührungsfläche mit dem äusseren Filtereinsatz 20 ergibt, wobei die leichteren Schmutzteilchen durch die Zentrifugalkraft gegen die Innenwand des äusseren Filtereinsatzes 20 befördert werden und dieser entlang nach unten rutschen, während die schweren Schmutzteilchen schon im Bereich der Aussenfläche des inneren Filtereinsatzes 9 nach unten fallen. Die ganz groben Schmutzteilchen wurden vom Vorfiltereinsatz 9 bereits zurückgehalten.

Die Anzahl der konzentrisch ineinander angeordneten Filtereinsätze 9, 20 etc. ist selbstverständlich nicht auf zwei beschränkt, sondern je nach Verschmutzungsgrad und Art der Verschmutzung können auch drei oder mehrere ineinander angeordnete Schlauchfilter zur Verwendung kommen. Man wird dabei normalerweise die einzelnen Filtereinsätze so anordnen, dass die Maschenweite der Filtereinsätze von innen nach aussen abnimmt.

Das Gehäuse 2 wird bei einer bevorzugten Ausführungsform aus Gründen der Druckfestigkeit zylindrisch ausgebildet.

Wie Versuche gezeigt haben, liegen die grossen Vorteile dieses neuen Gerätes in der einfachen Bedienbarkeit sowie in der raschen und effektiven Filtration der verschmutzten Flüssigkeit. Zum Schutze unserer Gewässer dürfte sich dieses Gerät in vielfachen Zusammenhängen anwenden lassen.

Eine spezielle Anwendungsart liegt in der Erstellung einer mobilen Filtrieranlage für die Wasseraufbereitung, wie dies beispielsweise bei Schwimmbecken erforderlich ist. Die zunächst mit Chlor abgetöteten Algen haften bekanntlich meist am Boden der Schwimmbecken und können dort abgesaugt werden, während das gereinigte Wasser im kontinuierlichen Betrieb wieder in das Becken geleitet wird.

**Patentansprüche**

1) Flüssigkeitssauger zum Absaugen einer mit Feststoffen verunreinigten Flüssigkeit, wie sie insbesondere bei Waschvorgängen anfällt, mit einem Gehäuse (2), das durch eine Filteranordnung (8 bis 10) in eine obere mit einem Zulauf (5, 7) versehene Kammer (3) für verunreinigte Flüssigkeit und eine darunterliegende mit einem Ablauf (15, 16) versehene Kammer für gefilterte Flüssigkeit unterteilt und mit einer Ansaugvorrichtung (6) versehen ist, dadurch gekennzeichnet, dass die Filteranordnung als Schlauchfilter ausgebildet ist und mindestens einen Filtersack (9, 20) aufweist, welcher von einem Durchlass (10) in einer die Zulauf- und die Ablaufkammer voneinander trennenden Trennwand (8) in die Ablaufkammer hineinhängt, wobei die Ansaugvorrichtung ein an der höchsten Stelle der Zulaufkammer angeordnetes Gebläse (6) ist, welches in dieser Zulaufkammer einen Absaug-Unterdruck erzeugt.

2) Flüssigkeitssauger nach Anspruch 1, dadurch gekennzeichnet, dass die Filteranordnung eine Mehrzahl an der als Lochplatte ausgebildeten Trennwand (8) aufgehangte aus Kunststoff hergestellte Sätze Filtersäcke (9, 20) aufweist.

3) Flüssigkeitssauger nach Anspruch 2, dadurch gekennzeichnet, dass die Filtersäcke (9, 20) mit ihrem oberen Rand in einer Ringschulter eines Einsatzflansches (19) an der Trennwand (8) aufgehängt und durch einen Ring (18) gehalten sind.

4) Flüssigkeitssauger nach Anspruch 1, dadurch gekennzeichnet, dass die ineinander angeordneten Filtersäcke (9, 20) aus Polypropylen bestehen und eine unterschiedliche, zwischen 0,08 und 0,20 mm liegende Maschenweite besitzen und dass die Maschenweite der Filtersäcke eines jeden Satzes von innen nach aussen abnimmt.

5) Flüssigkeitssauger nach einem der Ansprüche 1 bis 4, dadurch gekennzeichnet, dass zwischen zwei ineinander angeordneten Filtersäcken (9, 20) eines Satzes ein spiralschraubenförmiger Flüssigkeits-Leitsteg (24) angeordnet ist.

6) Flüssigkeitssauger nach einem der Ansprüche 1 bis 5, dadurch gekennzeichnet, dass jeder Filtersack-Satz (9, 20) an seinem unteren Abschnitt in einen flüssigkeitsundurchlässigen Auffangnapf (12) einmündet.

7) Flüssigkeitssauger nach einem der Ansprüche 1 bis 6, dadurch gekennzeichnet, dass in der Zulaufkammer (3) eine mit der Ansaugvorrichtung (6) verbundene Ueberfüllsicherung (22) vorgesehen ist.

8) Flüssigkeitssauger nach einem der Ansprüche 1 bis 7, dadurch gekennzeichnet, dass in der Ablaufkammer eine mit dem Ablauf verbundene Absaugpumpe (15) und eine diese niveauabhängig betätigende Steuereinrichtung (23a, 23b) vorgesehen sind.

**Claims**

1. Liquid suction-extractor for extracting a liquid contaminated with solids, such as occurs especially in washing processes, with a housing (2) which is divided by a filter arrangement (8 to 10) into an upper chamber (3) for contaminated liquid, equipped with an inflow (5, 7), and a chamber for filtered liquid, located underneath it and equipped with a flow-off (15, 16), and which is provided with a suction device (6) characterized in that the filter arrangement is designed as a hose filter and has at least one filter (9, 20) which hangs down into the flow-off chamber from a passage (10) in a partition wall (8) seperating the inflow chamber and flow-off chamber from one another, the suction device being a fan (6) which is arranged at the highest point of the inflow chamber and which generates a suction vacuum in this inflow chamber.

2. Liquid suction-extractor according to claim 1, characterised in that the filter arrangement has a multiplicity of sets of filter bags (9, 20) made of plastic and suspended on the partition wall (8) designed as a perforated plate.

3. Liquid suction-extractor according to claim 2, characterised in that the filter bags (9, 20) are suspended at their top edge on the partition wall (8) in an annular shoulder of an insertion flange (19) and are held by means of a ring (18).

4. Liquid suction-extractor according to claim 1, characterised in that the filter bags (9, 20) arranged inside one another consist of polypropylene and have a differing mesh width of between 0.08 and 0.20 mm, and in that the mesh width of the filter bags of each set decreases from the inside outwards.

5. Liquid suction extractor according to one the Claims 1 to 4, characterised in that a helical liquid guide web (24) is arranged between two filter bags (9, 20) of a set which are arranged inside one another.

6. Liquid suction-extractor according to one of Claims 1 to 5, characterised in that each filter-bag (9, 20) opens in its bottom portion into a collecting bowl (12) impermeable to liquid.

7. Liquid suction-extractor according to one of Claims 1 to 6, characterised in that an overflow prevention devise (22) connected to the suction device (6) is provided in the inflow chamber (3).

8. Liquid suction-extractor according to one of Claims 1 to 7, characterised in that a suction pump (15) connected to the flow-off and a control device (23a, 23b) actuating the latter as a function of the liquid level are provided in the flow-off chamber.

**Revendications**

1 - Dispositif d'aspiration de liquide destiné à aspirer un liquide souillé par des matières solides, tel qu'on en rencontre en particulier dans des opérations de lavage, comportant un boîtier (2) qui est divisé par un dispositif de filtration (8 à 10) en une chambre supérieure (3) destinée à du liquide souillé et pourvue d'une admission (5, 7) et une chambre sousjacente (3) destinée à du liquide filtré et pourvue d'une évacuation (15, 16), et un dispositif d'aspiration (6), caractérisé en ce que le dispositif de filtration a la forme d'un filtre à manche et comporte au moins un sac filtrant (9, 20) qui, à partir d'une ouverture (10) dans une cloison (8) séparant la chambre d'admission de la chambre d'évacuation s'étend dans la chambre d'évacuation, le dispositif d'aspiration étant constitué par une soufflante (6) installée à l'endroit le plus haut de la chambre d'admission, qui produit une dépression d'aspiration dans cette chambre d'admission.

2 - Dispositif d'aspiration de liquide suivant la revendication 1, caractérisé en ce que le dispositif de filtration comporte plusieurs jeux de sacs filtrants (9, 20) en matière plastique suspendus à la cloison de séparation (8) ayant la forme d'une plaque à ouvertures.

3 - Dispositif d'aspiration de liquide suivant la revendication 2, caractérisé en ce que les sacs filtrants (9, 20) sont suspendus à la cloison de séparation (8) par leur bord supérieur dans un épaulement annulaire d'une bride rapportée (19) et sont maintenus par un anneau (18).

4 - Dispositif d'aspiratiom de liquide suivant la revendication 1, caractérisé en ce que les sacs filtrants (9, 20) disposés l'un dans l'autre sont en polypropylène et présentent des mailles de grandeur differente comprises entre 0,08 et 0,20 mm et la grandeur des mailles des sacs filtrants de chaque jeu va en diminuant de l'intérieur vers l'extérieur.

5 - Dispositif d'aspiration de liquide suivant l'une quelconque des revendications 1 à 4, caractérisé en ce qu'entre deux sacs filtrants (9, 20) d'un jeu disposés l'un dans l'autre est disposé un guide hélicoïdal (24) pour le liquide.

6 - Dispositif d'aspiration de liquide suivant l'une quelconque des revendications 1 à 5, caractérisé en ce que chaque jeu de sacs filtrants (9, 20) s'ouvre à sa partie inférieure dans un godet de captage (12) imperméable aux liquides.

7 - Dispositif d'aspiration de liquide suivant l'une quelconque des revendications 1 à 6, caractérisé en ce qu'un dispositif de sécurité à trop-plein (22) raccordé au dispositif d'aspiration (6) est prévu dans la chambre d'admission (3).

8 - Dispositif d'aspiration de liquide suivant l'une quelconque des revendications 1 à 7, caractérisé en ce qu'une pompe aspirante (15) raccordée à l'évacuation et un dispositif de commande (23a, 23b) actionnant cette pompe en fonction du niveau sont prévus dans la chambre d'évacuation.

FIG. 1

FIG. 2

FIG.3

# FIG.4